# FASCICULE DE BREVET EUROPEEN

(11) **EP 2 090 530 B1**
(45) Date de publication et mention de la délivrance du brevet: **24.08.2011**
(21) Numéro de dépôt: 09152748.1
(22) Date de dépôt: 13.02.2009
(51) Int. Cl.: B65G 15/08, B65G 15/60, B65G 21/02, B65G 39/12

(54) **Convoyeur à bande avec des stations de support fortement espacées les unes des autres**
Bandförderer mit räumlich weit voneinander entfernten Support-Stationen
Belt conveyor with widely-spaced support stations

(30) Priorité: 13.02.2008 FR 0850902
(43) Date de publication de la demande: 19.08.2009
(73) Titulaire: Brunone, René, 27950 Saint Marcel (FR)
(72) Inventeur: Brunone, René, 27950 Saint-Marcel (FR)
(74) Mandataire: Blot, Philippe Robert Emile

(56) Documents cités:
- EP-A- 0 371 180
- EP-A- 0 516 626
- EP-A1- 0 058 040
- EP-A1- 0 345 193
- WO-A-95/11848
- DE-A1- 3 228 937
- DE-A1- 19 815 580
- FR-A- 2 871 452
- JP-A- 1 098 510
- JP-A- 11 334 825
- JP-A- 2003 292 131
- US-A- 5 836 440
- KERN H: "LANGSTRECKEN-TRANSPORT MIT GELAENDEANGEPASSTEN ROLLGURT-FOERDERANLAGEN. \LONG-DISTANCE TRANSPORT WITH ROLLER BELT CONVEYORS WHICH CONFORM TO THE TERRAIN" ZKG INTERNATIONAL, BAUVERLAG BV., G]TERSLOH, DE, vol. 46, no. 7, 1 juillet 1993 (1993-07-01), pages 376-378, XP000383293 ISSN: 0949-0205

## Description

La présente invention concerne en général les convoyeurs à bande.

Plus précisément, l'invention concerne, selon un premier aspect, un convoyeur à bande du type décrit dans le préambule de la revendication 1. Un tel convoyeur est connu de la demande FR 2 871 452.

Il est connu, dans les carrières ou sur les lieux d'extraction de minerais, d'utiliser de tels convoyeurs à bande pour déplacer les roches ou les minerais extraits. Ce déplacement peut s'effectuer sur des distances relativement longues pouvant atteindre plusieurs dizaines de kilomètres.

Dans un tel convoyeur, la bande est supportée presque en continu. Les stations de support constituent une fraction importante du coût total du convoyeur.

Par ailleurs, le franchissement de cours d'eau par ce convoyeur nécessite la mise en place de moyens particuliers tels que des châssis flottants équipés de moyens de support de la bande transporteuse. De tels châssis sont décrits dans la demande publiée sous le numéro FR 2 834 502. Ces châssis flottants sont coûteux. Alternativement, la bande peut être prévue flottante à la surface du cours d'eau.

DE19815580 et JP11334825 proposent des convoyeurs équipés de bandes non autoportantes circulant en hauteur.

Dans ce contexte, l'invention vise à proposer un convoyeur à bande qui soit moins coûteux, qui permette le franchissement de cours d'eau et d'obstacles à un coût réduit, et qui ne nécessite pas un supportage pratiquement continu de la bande.

A cette fin, l'invention porte sur un convoyeur selon la revendication 1.

Le convoyeur peut également présenter une ou plusieurs des caractéristiques ci-dessous, considérées individuellement ou selon toutes les combinaisons techniquement possibles :
- au moins la moitié des stations de support comportent chacune des moyens de support de la bande et un châssis reposant sur le sol, les moyens de support étant fixés sur le châssis à une hauteur par rapport au sol supérieure à deux mètres.
- au moins deux stations de support consécutives sont séparées longitudinalement le long de la bande par un écartement d'au moins vingt mètres.
- au moins la moitié des stations de support sont séparées chacune d'une station de support voisine respective par un écartement longitudinal le long de la bande d'au moins vingt mètres.
- au moins la moitié des stations de support comportent chacune des moyens de support de la bande et un châssis reposant sur le sol, les moyens de support étant fixés sur le châssis à une hauteur par rapport au sol supérieure à cinq mètres.
- l'armature de la bande comprend des câbles métalliques longitudinaux, répartis circonférentiellement autour de la bande.
- l'armature de la bande comprend des câbles métalliques transversaux.
- l'armature de la bande comprend un tissu en matière plastique.
- la bande présente, sur la plus grande partie de sa longueur longitudinale, une section fermée perpendiculairement à la direction longitudinale.
- certains rouleaux sont motorisés.
- chaque ensemble comprend au moins quatre rouleaux répartis circonférentiellement autour de la bande.
- la bande transporteuse est refermée en boucle et présente un brin de transport et un brin de retour, le convoyeur comprenant au moins une station de chargement du brin de transport en un matériau à transporter et une station de déchargement, le convoyeur comprenant en outre une deuxième station de chargement du brin de retour en un matériau à transporter et une deuxième station de déchargement du brin de retour.

Selon un second aspect, l'invention concerne l'utilisation d'un convoyeur à bande présentant les caractéristiques ci-dessus pour le franchissement d'un obstacle tel qu'un cours d'eau, le convoyeur comprenant deux stations de support consécutives le long de la bande et disposées de part et d'autre de l'obstacle, lesdites deux stations de support comportant chacune des moyens de support de la bande et un châssis reposant sur le sol, les moyens de support étant fixés sur le châssis, à une hauteur supérieure à deux mètres par rapport au sol.

D'autres caractéristiques et avantages de l'invention ressortiront de la description détaillée qui en est donnée ci-dessous, à titre indicatif et nullement limitatif, en référence aux figures annexées parmi lesquelles :
- les figures 1A et 1B sont des vues respectivement de dessus et de côté d'un convoyeur selon l'invention ;
- les figures 2A et 2B sont des vues respectivement en section et en perspective, d'un tronçon de la bande du convoyeur des figures 1A et 1B ;
- la figure 3 est une vue de côté d'une partie du convoyeur des figures 1A et 1B montrant deux stations de support de la bande disposées de part et d'autre d'une étendue d'eau de manière à permettre le franchissement de cette étendue d'eau par la bande ;
- la figure 4 est une vue en coupe longitudinale d'une station de support du convoyeur ; et
- la figure 5 est une vue en coupe transversale de la station de support de la figure 4, prise selon l'incidence des flèches V.

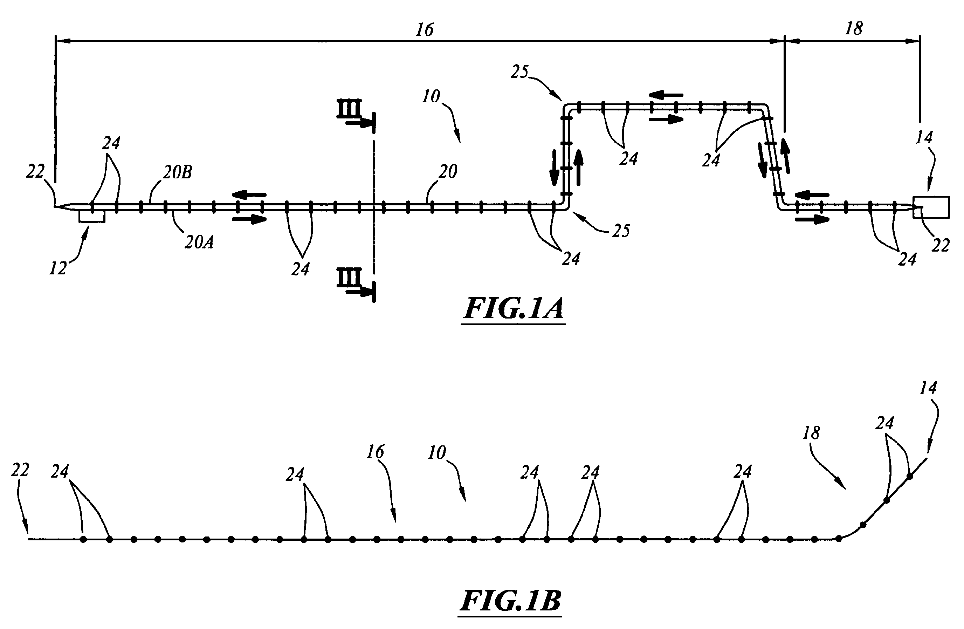

Le convoyeur 10 représenté sur les figures 1A et 1B est destiné à transporter des matériaux, notamment des matériaux en vrac finement divisés tels que du gypse, du sable, des graviers, des granulats ou autres sur une grande distance, celle-ci pouvant atteindre plusieurs dizaines de kilomètres. Ce transport s'effectue entre au moins une station de chargement 12 et une station de déchargement 14. Le sens de déplacement est représenté par des flèches sur la figure 1A.

Dans l'exemple considéré, le convoyeur s'étend sur une étendue 16 essentiellement plane, puis sur une pente 18 présentant un fort dénivelé, la station de déchargement étant au sommet de la pente 18. Le convoyeur 10 comporte une bande 20 refermée en boucle, présentant un brin de transport des matériaux 20A et un brin de retour à vide 20B s'étendant généralement parallèles l'un à l'autre suivant le trajet de déplacement du convoyeur. Cette bande est maintenue depuis ses extrémités entre deux rouleaux de retournement 22 dont l'un est prévu par exemple dans la station de déchargement 14 et l'autre par exemple en amont de la station de chargement 12.

Le convoyeur 10 comporte également une pluralité de stations 24 de support de la bande transporteuse, réparties longitudinalement le long de la bande transporteuse 20. La bande 20 repose et se déplace par rapport aux stations de support 24. Certaines stations comportent des moyens d'entraînement de l'un et/ou de l'autre brin de la bande. Les stations équipées de moyens d'entraînement sont réparties suivant la longueur de la bande. Dans le mode de réalisation illustré sur les figures 1A et 1B, le trajet de la bande présente des coudes 25. Les stations équipées de moyens d'entraînement sont disposées, pour chacun des brins de la bande, par exemple au moins immédiatement en amont des coudes 25 en considérant le sens d'avancement du brin en cause.

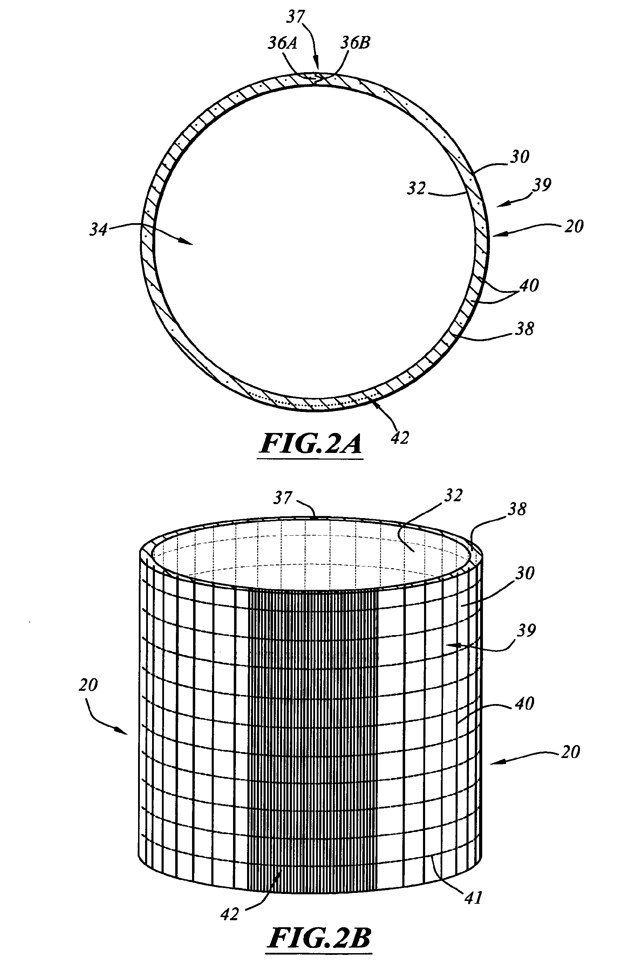

Comme illustré sur les figures 2A et 2B, la bande 20 présente généralement une forme de tube non aplati. Elle présente, sur la plus grande partie de sa longueur longitudinale, une section fermée perpendiculairement à la direction longitudinale.

Plus précisément, la bande 20 présente une surface extérieure 30, et une surface intérieure 32 propre à délimiter une surface de support des produits à transporter. La bande délimite ainsi en elle-même un espace clos tubulaire de confinement des produits à transporter. Cet espace clos est généralement de section circulaire, la bande épousant une forme de cylindre. Le périmètre de la bande est avantageusement compris entre 0,5 mètre et 3 mètres. Par exemple, il est tel que le diamètre de l'espace clos 34 délimité par la bande soit sensiblement égal à 0,40 mètre et de préférence compris entre 0,2 et 1 mètre.

La bande est fendue longitudinalement, les deux rives notées 36A, 36B de la bande étant accolées l'une à l'autre et définissant entre elles une fente longitudinale 37 normalement fermée. Les deux rives 36A et 36B peuvent par exemple se chevaucher. En variante, la rive 36A présente une partie en saillie formant tenon, alors que, dans son épaisseur, la rive 36B présente une partie en creux complémentaire formant mortaise et propre à recevoir la partie en saillie de la rive 36A. Cet accouplement à tenon et mortaise est adapté pour assurer une étanchéité satisfaisante de la bande.

En l'absence de tension extérieure excessive, et en l'absence de charges dues au matériau contenu dans l'espace 34 supérieures à une valeur de dimensionnement prédéterminée, la bande est autoportante. Elle conserve une forme de tube non aplati et de préférence sensiblement circulaire.

La bande 20 comprend généralement une matrice 38 en un matériau élastique et une armature 39 noyée dans la matrice. La matrice 38 est typiquement constituée de caoutchouc synthétique ou naturel.

La bande est fabriquée par tronçon. Chaque tronçon est mis en forme autour d'un noyau cylindrique, puis cuit sous forme cylindrique autour dudit noyau. La fabrication est réalisée en continu, chaque nouveau tronçon étant moulé et cuit de manière à constituer un prolongement de la portion de la bande déjà fabriquée. Chaque nouveau tronçon est donc fabriqué directement solidaire de la portion déjà prête. La cuisson est réalisée avec l'armature noyée dans la matrice. L'armature est placée dans la matrice avant ou pendant l'opération de mise en forme.

En variante, la matrice est en PVC.

L'armature 39 de la bande comprend des câbles métalliques longitudinaux 40. Les câbles 40 sont typiquement réalisées en acier, et présentent un allongement sous charge très faible, valant par exemple 0,2 à 0,3%. Ces câbles s'étendent sur toute la longueur de la bande 20. Ils sont typiquement régulièrement répartis circonférentiellement autour de la bande. L'armature 39 peut comprendre, en plus des câbles longitudinaux 40, des câbles métalliques transversaux 41. Ces câbles 41 sont typiquement réalisés en acier. Ils s'étendent circonférentiellement sur la plus grande partie du périmètre de la bande. Par exemple, une première extrémité de chaque câble 41 est situé à proximité de la rive 36A, l'extrémité opposée au côté 41 étant située à proximité de la rive 36B. Les câbles 40 et 41 sont par exemple entrelacés les uns avec les autres selon une trame prédéterminée.

En variante, l'armature 39 peut comporter à la place des câbles transversaux un tissu en matière plastique, par exemple un tissu de fibres de matière plastique à haute ténacité, telles que des fibres de polyamide.

La partie inférieure 42 de la bande est renforcée avec une densité plus importante de câbles de renfort longitudinaux 40. La partie 42 est la région circonférentiellement opposée à la fente longitudinale 37. Elle supporte le poids des matériaux transportés et est soumise à des contraintes plus élevées que le reste de la bande.

Les stations de support 24 comportent chacune des moyens 44 de support de la bande et un châssis 46 reposant sur le sol. Les moyens de support sont fixés sur le châssis à une hauteur par rapport au sol supérieure à deux mètres, de préférence supérieure à cinq mètres et valant par exemple dix mètres.

La hauteur des moyens de support doit être inférieure à une limite prédéterminée, résultant de contraintes réglementaires, météorologiques (hauteur dimensionnée pour résister à une tempête décennale ou centenaire par exemple), architecturales et/ou économiques. La hauteur maximale est par exemple de 50 mètres.

Typiquement, deux stations de support 24 consécutives le long de la bande sont séparées par un écartement longitudinal compris entre 20 et 500 mètres, de préférence compris entre 70 et 200 mètres, et valant typiquement 100 mètres.

L'écartement entre deux stations de support consécutives et la hauteur des moyens de support de chaque station sont déterminés précisément en fonction de la nature et du relief du terrain, des obstacles à franchir, du diamètre de la bande, de la masse de la bande par unité de longueur de bande, et de la masse de produits à transporter par unité de longueur de bande. Ainsi, pour une bande présentant une masse de 40 kilos au mètre, chargée de 60 kilos de produits au mètre, un écartement de 100 mètres entre deux stations de support consécutives est acceptable. Les obstacles à franchir peuvent être naturels (collines, forêts, plans d'eau, cours d'eau), ou être des constructions (bâtiments) ou des routes.

Par ailleurs, la hauteur exacte des moyens de support d'une station est déterminée précisément en fonction de l'écartement longitudinal le long de la bande entre ladite station de support et les stations situées immédiatement avant et immédiatement après ladite station le long de la bande. Plus l'écartement avec les deux stations voisines est grand, plus les moyens de support seront fixés sur le châssis à une hauteur importante par rapport au sol, car la bande se creuse de manière plus prononcée entre les deux stations.

Inversement, la hauteur des moyens de support peut être, dans certains cas, fortement limitée, pour des raisons réglementaires, pour limiter les risques de chute de la station de support dus à des phénomènes naturels (vents, tempêtes) pour mieux s'intégrer dans le paysage, ou pour réduire le coût du châssis, comme décrit ci-dessus. Dans ce cas, l'écartement entre les stations de support voisines est choisi pour permettre de maintenir les moyens de support en dessous d'une hauteur maximum déterminée.

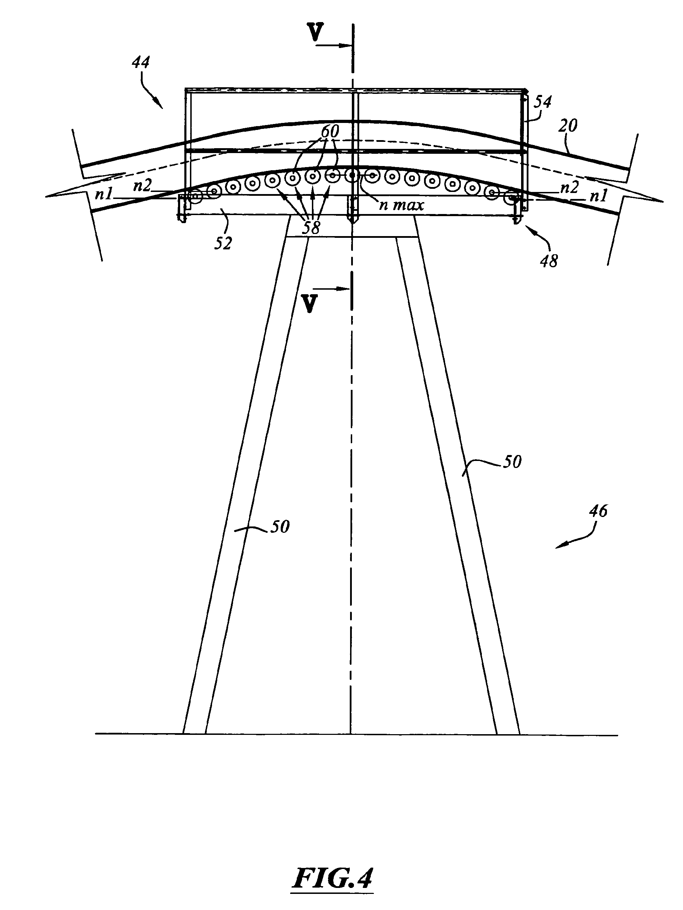

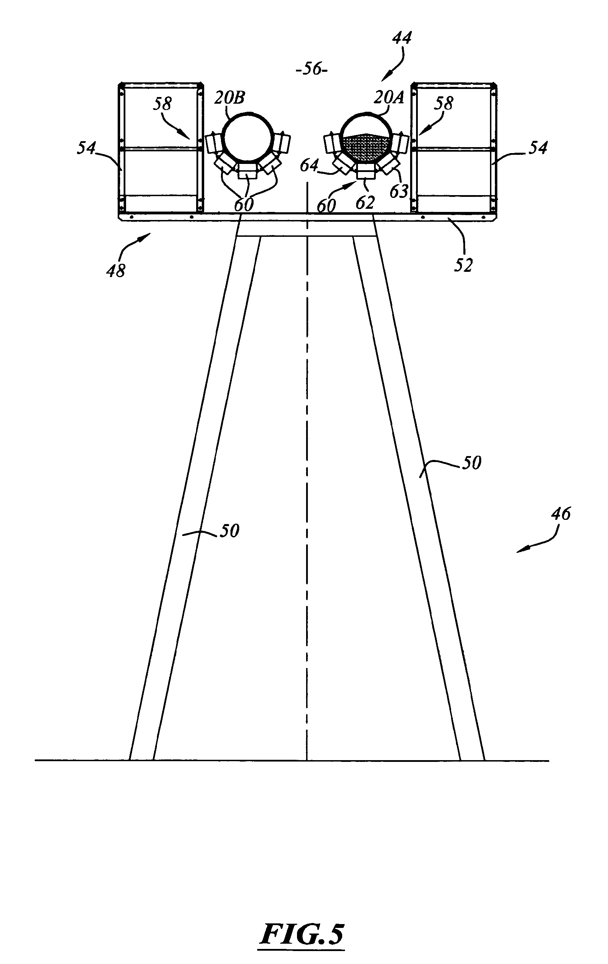

Comme visible sur les figures 4 et 5, le châssis 46 comporte une nacelle 48 et des poteaux 50 de support de la nacelle. La nacelle 48 est solidaire de l'extrémité supérieure des poteaux. La nacelle 48 comporte une plateforme 52 portant deux structures latérales 54 délimitant entre elles un passage longitudinal de circulation 56 des bandes. Les deux brins de la bande 20A et 20B sont disposés côte à côte dans le passage 56. Les structures latérales 54 sont prévues pour permettre la maintenance des moyens 44 de support de la bande.

Les moyens de support 44 comportent, pour chacun des deux brins 20A et 20B, plusieurs ensembles 58 de rouleaux 60 répartis longitudinalement le long du brin correspondant. Chaque ensemble 58 forme un berceau de support et de guidage d'un tronçon longitudinal du brin 20A ou 20B.

Chaque ensemble 58 comporte au moins 4 rouleaux, de préférence cinq rouleaux 60. Ces rouleaux 60 sont répartis circonférentiellement le long de la moitié inférieure du périmètre de la bande. Les rouleaux 60 sont montés libres en rotation par rapport à une structure de support non représentée, ladite structure de support étant rigidement fixée à la nacelle 48.

Les moyens de support 44 du brin 20A comprennent une série d'au moins 10 ensembles 58 répartis longitudinalement le long dudit brin. De préférence, les moyens de support du brin 20A comportent une série d'au moins 15 ensembles 58, et comportent typiquement 20 ensembles 58 régulièrement écartés longitudinalement les uns des autres. Chacun des ensembles 58 comporte 5 rouleaux.

De manière à guider la bande et à conférer au brin 20A un profil longitudinal adapté, les ensembles de rouleaux 58 sont décalés verticalement les uns par rapport aux autres selon une courbe longitudinale convexe vers le haut, visible sur la figure 4.

Les deux ensembles 58 situés le plus en amont et le plus en aval de la série sont situés à un premier niveau par rapport au sol n1. L'ensemble 58 situé au deuxième rang en partant de l'amont est situé à un niveau n2 légèrement plus élevé que le niveau n1. De même, l'ensemble 58 situé au deuxième rang en partant de l'aval est situé au même niveau n2. L'ensemble 58 est situé au troisième rang en partant de l'amont est situé à un niveau n3 supérieur au niveau n2, et ainsi de suite. De même, l'ensemble 58 situé au troisième rang en partant de l'aval est situé au niveau n3, et ainsi de suite. L'ensemble, ou les deux ensembles, situé longitudinalement au centre de la série, est situé à un niveau Nmax supérieur au niveau des autres ensembles de rouleaux. Ainsi, quand on parcours les ensembles de rouleaux d'amont en aval, on observe que le niveau des ensembles de rouleaux s'élève jusqu'aux ensembles de rouleaux placés longitudinalement au centre de la série d'ensemble de rouleaux, puis décroît jusqu'à l'extrémité avale.

On entend ici par niveau d'un ensemble de rouleaux par exemple le niveau par rapport au sol de l'axe de rotation du rouleau 60 situé le plus bas.

Par ailleurs, on entend par hauteur des moyens de support de la bande, le niveau de l'ensemble de rouleaux le plus haut parmi les ensembles 58 supportant le brin 20A.

Les ensembles 58 peuvent être étagés selon un profil différent, par exemple en fonction de la pente du sol le long du parcours de la bande. Si le sol monte d'amont en aval, les ensembles 58 peuvent être placés à des niveaux toujours croissants d'amont en aval. A l'inverse, si le sol descend d'amont en aval, les ensembles 58 peuvent être placés à des niveaux toujours décroissants d'amont en aval.

Le brin 20B de la bande est supporté de la même façon, par une pluralité d'ensembles 58 de rouleaux, chaque ensemble comprenant au moins quatre rouleaux, de préférence cinq. Chaque station de support peut comporter pour les brins 20A et 20B, le même nombre d'ensembles 58. Toutefois, dans le cas où le brin 20B n'est pas chargé en produits à transporter, il est possible de prévoir un plus petit nombre d'ensembles 58 pour le brin 20B que pour le brin 20A. Par exemple, les moyens de support 44 peuvent ne comporter que 15 ensembles 58 pour le brin 20B et 20 ensembles 58 pour le brin 20A. De même, les moyens 44 peuvent comporter 10 ensembles 58 pour le brin 20B et 15 ensemble 58 pour le brin 20A.

Comme indiqué ci-dessus, certaines stations de support peuvent comporter des moyens d'entraînement de la bande. Ces moyens peuvent être prévus pour entraîner le brin 20A de la bande ou le brin 20B ou les deux.

Ces moyens, qui ne sont pas représentés, comprennent typiquement trois ensembles moto réducteurs, rigidement fixés et logés dans une structure latérale 54. Les trois moto réducteurs sont prévus pour entraîner en rotation chacun 4 rouleaux appartenant à 4 ensembles 58 consécutifs le long de la bande. L'un des moto réducteurs entraîne les rouleaux 62 situés circonférentiellement au centre des ensembles 58 correspondants, par exemple à la verticale en dessous de la bande dans la représentation de la figure 5. Un autre moto réducteur est prévu pour entraîner quatre autres rouleaux 63, appartenant aux mêmes ensembles 58 que les rouleaux 62. Chaque rouleau 63 est situé circonférentiellement à droite d'un rouleau 62.

Le troisième moto réducteur est prévu pour entraîner quatre rouleaux 64 appartenant aux mêmes ensembles que les rouleaux 62. Les rouleaux 64 sont situés immédiatement à gauche des rouleaux 62 dans la représentation de la figure 5. Ainsi, les trois rouleaux situés sous la partie inférieure de la bande sont motorisés, de manière à entraîner efficacement la bande.

Les moyens d'entraînement d'un même brin sont disposés dans des stations de support séparées les unes des autres d'environ un kilomètre le long de la bande. Les stations de support situées entre deux stations de support motorisées pour un brin sont dépourvues de moyens d'entraînement pour le brin en cause.

Les stations de chargement 12 et de déchargement 14 sont du type décrit dans la demande de brevet publiée sous le numéro FR 2871 452. Elles ne seront pas décrites en détail ici.

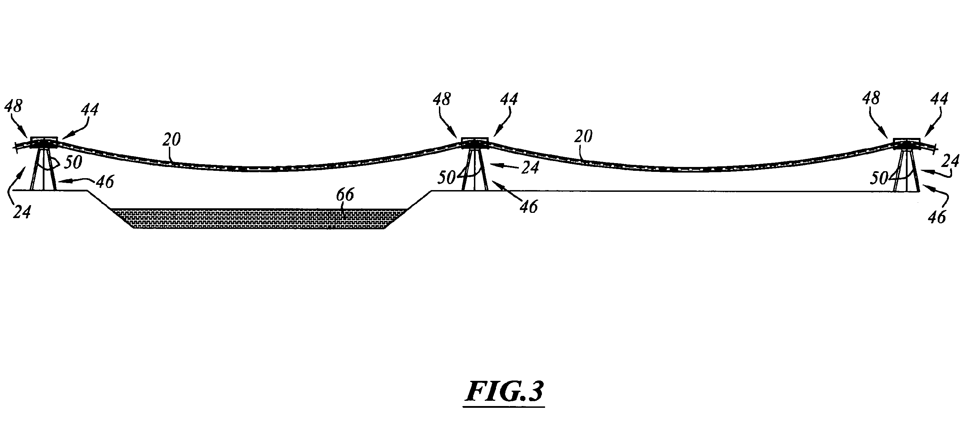

L'utilisation d'un convoyeur tel que décrit ci-dessus est particulièrement avantageuse quand le convoyeur doit franchir un obstacle tel qu'un cours d'eau 66 (voir figure 3). L'obstacle 66 est par exemple une rivière, un fleuve, une retenue d'eau, un lac, ...etc. Dans ce cas, deux stations de support 24, consécutives le long de la bande, sont disposées l'une d'un côté de l'obstacle et l'autre du côté opposé. La hauteur par rapport au sol des moyens de support de la bande des deux stations est choisie entre autre en fonction de la largeur de l'obstacle le long du trajet de la bande. Il n'est pas nécessaire de prévoir des moyens de support de la bande à un point intermédiaire entre les deux stations de support, du type des châssis flottants évoqués plus haut.

Le convoyeur à bande décrit ci-dessus présente de multiples avantages.

Du fait que la bande transporteuse comporte une matrice en un matériau élastique et une armature noyée dans la matrice, et du fait qu'au moins certaines stations de support comportent chacune des moyens de support de la bande et un châssis reposant sur le sol, les moyens de support étant fixés sur le châssis à une hauteur par rapport au sol supérieure à deux mètres, il est possible d'espacer lesdites stations de support avec un écartement important. De ce fait, le convoyeur comporte un nombre réduit de stations de support pour une longueur déterminée. Il n'est plus nécessaire de supporter la bande de manière pratiquement continue, comme pour des convoyeurs de l'état de la technique. Ceci conduit à une diminution du coût du convoyeur.

Ainsi, il est possible de prévoir que deux stations de support consécutives le long de la bande présentent entre elle un écartement de 100 mètres, voire de 200 mètres ou plus.

De ce fait, le convoyeur peut être utilisé pour franchir des cours d'eau de largeurs importantes sans avoir à disposer de moyens de support de la bande flottants sur le cours d'eau. Du fait de l'absence de ces moyens de support flottants, le coût du convoyeur est considérablement réduit.

De même, le convoyeur peut être utilisé pour franchir des obstacles au milieu desquelles il n'est pas facile d'implanter des stations de support de la bande. Ces étendues sont par exemple des zones de bureaux ou d'habitations, ou des autoroutes de grandes largeurs, ou des zones de chantiers ou de travaux.

Le fait que l'armature de la bande comporte des câbles métalliques longitudinaux permet de conférer à la bande une rigidité suffisante pour limiter le creusement de la bande entre deux stations de support. Le creusement acceptable est fonction de la hauteur à laquelle sont placés les moyens de support de la bande dans les stations de support. Plus les moyens de support seront placés à une hauteur importante, plus le creusement acceptable sera élevé et plus l'écartement entre deux stations de support consécutives pourra être grande.

Par ailleurs, une possibilité pour limiter le creusement de la bande consiste à choisir une bande avec un plus grand nombre de câbles métalliques longitudinaux, de manière à accroître la rigidité de la bande. Ceci permet également d'augmenter la charge transportable.

De même, le fait de prévoir que l'armature comprend des câbles métalliques transversaux contribue à la fois à l'augmentation de la rigidité de la bande et à l'augmentation de la charge transportable par celle-ci. En variante, les câbles métalliques transversaux peuvent être remplacés par un tissu en matière plastique, ce qui permet de réduire le poids de la bande par unité de longueur.

Le fait que la bande présente une section transversale fermée contribue à augmenter la rigidité de la bande, et permet d'éviter que les matériaux finement divisés transportés par la bande soient projetés dans l'atmosphère.

Il est particulièrement important d'assurer un support et un guidage de la bande sur une fraction importante de sa périphérie et sur une longueur longitudinale importante, au niveau de chaque station de support. Ceci contribue à augmenter l'écartement entre les stations de support. Cet objectif est atteint en utilisant par exemple des ensembles de quatre rouleaux répartis circonférentiellement, chaque station de support comportant au moins dix ensembles de ce type.

Selon l'invention, ces ensembles sont décalés verticalement les uns par rapport aux autres, de manière à s'adapter au profil longitudinal de la bande. Ceci contribue à rendre le supportage et le guidage particulièrement efficace puisque tous les rouleaux sont simultanément en appui contre la bande. Ceci permet également de corriger partiellement le profil longitudinal de la bande et d'influencer l'écartement entre les stations de support.

Du fait qu'il est possible de motoriser les rouleaux de certaines stations de support, le convoyeur à bande peut être de grande longueur. Le convoyeur peut être utilisé sur terrain plat, comme par exemple sur l'étendue 16 des figures 1A et 1B. Il peut également s'étendre sur de fortes pentes (zone 18 des figures 1A et 1B), sous réserve de dimensionner correctement l'écartement entre les stations de support et la hauteur des moyens de support de chaque station.

Le convoyeur à bande peut présenter de multiples variantes.

Il n'est pas nécessaire que toutes les stations de support du convoyeur soient équipées de moyens de support de la bande placés à des hauteurs supérieures à cinq mètres par rapport au sol. Seulement certaines des stations peuvent être équipées de moyens de support placés à de telles hauteurs. Par exemple, seul un petit nombre de stations peut être équipé de moyens de support placés à plus de cinq mètres du sol, en vue de permettre le franchissement d'obstacles tels que des plans d'eau. Alternativement, la plus grande partie des stations de support peuvent être équipées de moyens de support placés à plus de cinq mètres du sol, en vue de réduire le nombre de stations de support nécessaires le long du parcours de la bande. Par exemple, toutes les stations de support sont équipées de moyens de support placés à plus de cinq mètres.

Les moyens de support de la bande ne sont pas nécessairement placés à la même hauteur dans toutes les stations de support. Ils peuvent être placés à des hauteurs différentes, en fonction de l'écartement entre les stations de support, et en fonction des obstacles à franchir entre les stations de support. Ainsi, si la bande doit passer au-dessus de constructions ou d'arbres, par exemple, les stations de support dans la zone correspondante peuvent être prévues avec des moyens de support de la bande placés à des hauteurs plus importantes par rapport au sol. Il est possible de prévoir que les deux brins de la bande soient disposés à des hauteurs différentes par rapport au sol dans certaines ou dans toutes les stations de support. En effet, le brin de retour n'est pas chargé, et va moins se creuser entre deux stations. Il peut donc être placé légèrement plus bas que le brin de transport.

Les stations de support peuvent être distinctes pour le brin de transport et pour le brin de retour de la bande. Ainsi, le brin de transport peut être supporté par une pluralité de stations qui lui sont dédiées, et le brin de retour par d'autres stations différentes des précédentes, qui lui sont également dédiées. C'est le cas notamment quand la bande suit un parcours en boucle, le parcours du brin de transport étant différent du parcours du brin de retour.

Le nombre de câbles métalliques longitudinaux et transversaux est variable et est fonction de la rigidité recherchée pour la bande de transport.

La bande ne présente pas nécessairement une section transversale circulaire. Elle peut présenter une section ovale, ou toute autre forme de section.

Le convoyeur à bande ne s'étend pas nécessairement sur une étendue plane, mais peut s'étendre dans une étendue ayant des reliefs, le convoyeur franchissant le long de son trajet plusieurs sommets et/ou plusieurs vallées.

Les stations de chargement et de déchargement ne sont pas nécessairement situées aux extrémités des convoyeurs, au niveau ou à proximité des rouleaux de retournement. Elles peuvent être situées en tout point intermédiaire entre les rouleaux. Le convoyeur peut comporter plusieurs stations de chargement et/ou de déchargement.

Le brin de retour ne circule pas nécessairement à vide mais peut au contraire assurer le transport de matériaux. Dans ce cas, le convoyeur comprend au moins une deuxième station de chargement et une deuxième station de déchargement associées au brin de retour. Dans ce cas, entre le rouleau de retournement 22 situé en aval du brin de transport - c'est-à-dire en tête du brin de retour - et la station de chargement du brin de retour, le convoyeur comprend des moyens de guidage et de torsion du brin de retour. En effet, à la sortie du rouleau de retournement 22, la fente longitudinale 37 du brin de retour est orienté vers le bas. Les moyens de guidage et de torsion sont aptes à ramener la fente 37 vers le haut, et à placer le brin de retour sensiblement dans le même plan que le brin de transport.

Les moyens d'entraînement de la bande peuvent n'entraîner, pour un ensemble de rouleaux donné, qu'un seul ou que deux rouleaux. Inversement, les moyens d'entraînement peuvent entraîner quatre rouleaux ou plus. Les moyens d'entraînement peuvent entraîner tous les rouleaux de l'ensemble.

Les moyens d'entraînement peuvent entraîner en rotation des rouleaux appartenant à plus ou moins de quatre ensembles de rouleaux, voire de chaque ensemble de rouleaux.

Dans un mode de réalisation particulier du convoyeur à bande, la bande présente entre les deux rouleaux de retournement une longueur de quelques centaines de mètres, par exemple trois à quatre cent mètres. Dans ce cas, le convoyeur ne comprend, entre ses rouleaux de retournement, aucune station de support. Les rouleaux constituent dans ce cas, les deux seules stations de support de la bande du convoyeur.

## Revendications

1. Convoyeur à bande (10) comprenant :
- une bande transporteuse (20) longitudinale, la bande transporteuse (20) étant tubulaire et comportant une matrice (38) en un matériau élastique et une armature (39) noyée dans la matrice (38), la bande transporteuse (20) étant autoportante et conservant une forme de tube non aplati en l'absence de tension extérieure et de charges excessives, et
- une pluralité de stations (24) de support de la bande transporteuse (20) réparties longitudinalement le long de ladite bande transporteuse (20), au moins certaines stations de support (24) comportant chacune des moyens de support (44) de la bande (20) et un châssis (46) reposant sur le sol,
**caractérisé en ce que** les moyens de support (44) sont fixés sur le châssis (46) à une hauteur par rapport au sol supérieure à deux mètres, **en ce que** les moyens (44) de support de la bande (20) comprennent au moins dix ensembles (58) de rouleaux (60), répartis longitudinalement le long de la bande (20), chaque ensemble (58) comprenant au moins un rouleau (60) répartis circonférentiellement autour de la bande (20), lesdits ensembles (58) de rouleaux (60) étant décalés verticalement les uns par rapport aux autres selon une courbe longitudinale convexe vers le haut.

2. Convoyeur à bande selon la revendication 1, **caractérisé en ce qu'**au moins la moitié des stations de support (24) comportent chacune des moyens de support (44) de la bande et un châssis (46) reposant sur le sol, les moyens (44) de support étant fixés sur le châssis (46) à une hauteur par rapport au sol supérieure à deux mètres.

3. Convoyeur à bande selon la revendication 1 ou 2, **caractérisé en ce qu'**il comporte au moins deux stations de support (24) consécutives séparées longitudinalement le long de la bande (20) par un écartement d'au moins vingt mètres.

4. Convoyeur à bande selon l'une quelconque des revendications précédentes, **caractérisé en ce qu'**au moins la moitié des stations de support (24) sont séparées chacune d'une station (24) de support voisine respective par un écartement longitudinal le long de la bande (20) d'au moins vingt mètres.

5. Convoyeur à bande selon l'une quelconque des revendications précédentes, **caractérisé en ce qu'**au moins la moitié des stations de support (24) comportent chacune des moyens de support (44) de la bande (26) et un châssis (46) reposant sur le sol, les moyens de support (44) étant fixés sur le châssis (46) à une hauteur par rapport au sol supérieure à cinq mètres.

6. Convoyeur à bande selon l'une quelconque des revendications précédentes, **caractérisé en ce que** l'armature (39) de la bande (20) comprend des câbles métalliques longitudinaux (40) répartis circonférentiellement autour de la bande (20).

7. Convoyeur à bande selon l'une quelconque des revendications précédentes, **caractérisé en ce que** l'armature (39) de la bande (20) comprend des câbles métalliques transversaux (41).

8. Convoyeur à bande selon l'une quelconque des revendications précédentes, **caractérisé en ce que** l'armature (39) de la bande (20) comprend un tissu en matière plastique.

9. Convoyeur à bande selon l'une quelconque des revendications précédentes, **caractérisé en ce que** la bande (20) présente, sur la plus grande partie de sa longueur longitudinale, une section fermée perpendiculairement à la direction longitudinale.

10. Convoyeur à bande selon l'une quelconque des revendications précédentes, **caractérisé en ce que** certains rouleaux (60) sont motorisés.

11. Convoyeur selon l'une quelconque des revendications précédentes, **caractérisé en ce que** chaque ensemble (58) comprend au moins quatre rouleaux (60) répartis circonférentiellement autour de la bande (20).

12. Convoyeur à bande selon l'une quelconque des revendications précédentes, **caractérisé en ce que** la bande transporteuse (20A) est refermée en boucle et présente un brin de transport (20A) et un brin de retour (20B), le convoyeur comprenant au moins une station (12) de chargement du brin de transport (20A) en un matériau à transporter et une station de déchargement (14), le convoyeur comprenant en outre une deuxième station de chargement du brin de retour (20B) en un matériau à transporter et une deuxième station de déchargement du brin de retour.

13. Utilisation d'un convoyeur à bande selon l'une quelconque des revendications précédentes pour le franchissement d'un obstacle tel qu'un cours d'eau (66), le convoyeur (10) comprenant deux stations de support (24) consécutives le long de la bande (20) et disposées de part et d'autre de l'obstacle (66), lesdites deux stations de support (24) comportant chacune des moyens (44) de support de la bande (20) et un châssis (46) reposant sur le sol, les moyens (44) de support étant fixés sur le châssis à une hauteur par rapport au sol supérieure à deux mètres.

## Claims

1. Belt conveyor (10) comprising:
- a longitudinal conveyor belt (20), the conveyor belt (20) being tubular and comprising a matrix (38) made of a resilient material and a frame (39) embedded in the matrix, the conveyor belt (20) being self-supporting and maintaining a substantially rounded tubular shape in absence of excessive external pressure and loading, and
- a plurality of stations (24) for supporting the conveyor belt (20) distributed longitudinally along said conveyor belt (20), at least some support stations (24) each comprise a support (44) for supporting the belt (20) and a framework (46) supported on the ground,
**characterized in that** the support (44) is fixed on the framework (46) at a height greater than two meters relative to the ground, **in that** the support (44) for supporting the belt (20) comprise at least ten of said sets (58) of rollers (60) distributed longitudinally along the belt (20), each set (58) comprising at least one roller (60) distributed about the circumference of the belt (20), said sets (58) of rollers (60) are vertically staggered relative to one another along an upwardly convex longitudinal curve.

2. Belt conveyor according to claim 1, **characterized in that** at least half the support stations (24) each comprise a support (44) for supporting the belt and a framework (46) supported or, the ground, the support (44) being fixed on the framework (46) at a height greater than two meters relative to the ground.

3. Belt conveyor according to claim 1 or 2, **characterized in that** the conveyor comprises at least two consecutive support stations (24) separated longitudinally along the belt (20) at a distance of at least 20 meters.

4. Belt conveyor according to claim 1, **characterized in that** at least half the support stations (24) are each separated from a respective adjacent support station (24) at a longitudinal distance along the belt (20) of at least 20 meters.

5. Belt conveyor according to anyone of the preceding claim, **characterized in that** at least half the support stations (24) each comprise a support (44) for supporting the belt (20) and a framework (46) supported on the ground, the support (44) being fixed on the framework (46) at a height greater than five meters relative to the ground.

6. Belt conveyor according to anyone of the preceding claims, **characterized in that** the frame (39) of the belt (2.0) comprises longitudinal metal cables (40) distributed around the circumference of the belt (20).

7. Belt conveyor according to anyone of the preceding claims, **characterized in that** the frame (39) of the belt (20) comprises transverse metal cables (41).

8. Belt conveyor according to anyone of the preceding claims, **characterized in that** the frame (39) of the belt (20) comprises a fabric made of plastics material.

9. Belt conveyor according to anyone of the preceding claims, **characterized in that** over the majority of its longitudinal length, the belt (20) has a cross-section which is closet perpendicular to the longitudinal direction.

10. Belt conveyor according to anyone or the preceding claims, **characterized in that** some rollers (60) are motorized.

11. Belt conveyor according to anyone of the preceding claims, **characterized in that** each set (58) comprises at least four rollers (60) distributed about the circumference of the belt (20).

12. Belt conveyor according to anyone of the preceding claims, **characterized in that** the conveyor belt (20) is configured as a closed loop and has a convoying side (20A) and a return side (20B), the conveyor comprising at least one station (12) for loading the conveyor side (20A) with material to be transported and an unloading station (14), the conveyor further comprising a second station for loading the return side (20B) with material to be transported and a second station for unloading the return side.

13. Use of a belt conveyor according to anyone of the preceding claim for crossing ain obstacle, such as a stretch of water (66), the conveyor (10) comprising two consecutive support stations (24) along the belt (20) arranged on either side of the obstacle (66), said two support stations (24) each comprising a support (44) for supporting the belt (20) and a framework (46) supported on the ground, the support (44) being fixed on the framework (46) at a height greater than two meters relative to the ground.

## Patentansprüche

1. Bändförderer (10), welcher folgendes aufweist:
- ein in einer Längsrichtung verlaufendes Transportband (20), wobei das Transportband (20) rohrförmig ist und eine Matrix (38) aus einem elastischen Material sowie eine in die Matrix (38) eingebettete Bewehrung (39) aufweist, wobei das Transportband (20) selbsttragend ist und in Abwesenheit einer externen Spannung sowie übermäßiger Betastungen eine nicht abgeplattete Rohrform beibehält, und
- eine Vielzahl von Stationen (24) zum Abstützen des Transportbandes (20), die in Längsrichtung entlang des Transportbandes (20) verteilt sind, wobei zumindest bestimmte Abstützstationen (24) jeweils Abstützeinrichtungen (44) zum Abstützen des Bandes (20) und ein auf dem Boden aufliegendes Gestell (46) aufweisen, **dadurch gekennzeichnet,**
**dass** die Abstützeinrichtungen (44) an dem Gestell (46) in einer Höhe von mehr als zwei Metern in Bezug auf den Boden befestigt sind,
**dass** die Abstützeinrichtungen (44) zum Abstüzen des Bandes (20) mindestens zehn Sätze (58) von Rollen (60) aufweisen, die in Längsrichtung entlang des Bandes (20) verteilt sind, wobei jeder Satz (58) mindestens eine Rolle (60) aufweist, weich umfangsmäßig um das Band (20) herum verteilt sind, wobei die Sätze (58) von Rollen (60) entlang einer nach oben hin konvexen Längskurve in der Vertikal richtung zueinander versetzt sind.

2. Bandförderer nach Anspruch 1,
**dadurch gekennzeichnet,**
**dass** mindestens die Hälfte der Abstützstationen (24) jeweils Abstützeinrichtungen (44) zum Abstützen des Bandes und ein auf dem Boden aufliegendes Gestell (46) aufweisen, wobei die Abstützeinrichtungen (44) an dem Gestell (46) in einer Höhe von mehr als zwei Metern in Bezug auf den Boden befestigt sind.

3. Bandförderer nach Anspruch 1 oder 2,
**dadurch gekennzeichnet,**
**dass** er mindestens zwei aufeinander folgende Abstützstationen (24) aufweist, die in Längsrichtung entlang des Bandes (20) durch einen Abstand von mindestens zwanzig Metern voneinander getrennt sind.

4. Bandförderer nach einem der vorherigen Ansprüche,
**dadurch gekennzeichnet,**
**dass** zumindest die Hälfte der Abstützstationen (24) von einer jeweiligen benachbarten Abstützstation (24) jeweils durch einen Längsabstand entlang des Bandes (20) von mindestens zwanzig Metern getrennt sind.

5. Bandförderer nach einem der vorherigen Ansprüche,
**dadurch gekennzeichnet,**
**dass** zumindest die Hälfte der Abstützstationen (24) jeweils Abstützeinrichtungen (44) zum Abstützen des Bandes (20) sowie ein auf dem Boden aufliegendes Gestell (46) aufweisen, wobei die Abstützeinrichtungen (44) an dem Gestell (46) in einer Höhe von mehr als fünf Metern in Bezug auf den Boden befestigt sind.

6. Bandförderer nach einem der vorherigen Ansprüche,
**dadurch gekennzeichnet,**
**dass** die Bewehrung (39) des Bandes (20) metallische Längsseile (40) aufweist, die umfangsmäßig um das Band (20) herum verteilt sind.

7. Bandförderer nach einem der vorherigen Ansprüche,
**dadurch gekennzeichnet,**
**dass** die Bewehrung (39) des Bandes (20) metallische Querseile (41) aufweist.

8. Bandförderer nach einem der vorherigen Ansprüche,
**dadurch gekennzeichnet,**
**dass** die Bewehrung (39) des Bandes (20) ein Gewebe aus einem Kunststoffmaterial aufweist.

9. Bandförderer nach einem der vorherigen Ansprüche,
**dadurch gekennzeichnet,**
**dass** das Band (20) senkrecht zur Längsrichtung über den größten Teil seiner Lange in der Längsrichtung einen geschlossenen Querschnitt aufweist.

10. Bandförderer nach einem der vorherigen Ansprüche,
**dadurch gekennzeichnet,**
**dass** bestimmte Rollen (60) motorisiert sind.

11. Bandförderer nach einem der vorherigen Ansprüche,
**dadurch gekennzeichnet,**
**dass** jeder Satz (58) mindestens vier Rollen (60) aufweist, die umfangsmäßig um das Band (20) herum verteilt sind.

12. Bandförderer nach einem der vorherigen Ansprüche,
**dadurch gekennzeichnet,**
**dass** das Transportband (20A) in Form einer geschlossenen Schleife ausgebildet ist und ein Transporttrum (20A) sowie ein Rücklauftrum (20B) aufweist, wobei der Bandförderer mindestens eine Station (12) zum Beladen des Transporttrums (20A) mit einem zu transportierenden Material und eine Entladestation (14) aufweist, und dass der Bandförderer ferner eine zweite Station zum Beladen des Rücklauftrums (20B) mit einem zu transportierenden Material und eine zweite Station zum Entladen des Rücklauftrums aufweist.

13. Verwendung eines Bandförderers nach einem der vorherigen Ansprüche zum Überqueren eines Hindernisses, wie etwa eines Gewässers (66), wobei der Bandförderer (10) zwei Abstützstationen (24) aufweist, die entlang des Band (20) aufeinander folgen und beidseitig von dem Hindernis (66) angeordnet sind, wobei die beiden Abstützstationen (24) jeweils Abstützeinrichtungen (44) zum Abstützen des Bandes (20) und ein auf dem Boden aufliegendes Gestell (46) aufweisen, und wobei die Abstützeinrichtungen (44) an dem Gestell in einer Höhe von mehr als zwei Metern in Bezug auf den Boden befestigt sind.
